# EUROPEAN PATENT APPLICATION

(11) **EP 0 908 525 A1**
(43) Date of publication of application: **14.04.1999**
(21) Application number: 97202904.5
(22) Date of filing: 22.09.1997
(51) Int. Cl.: C22B 3/44, C22B 15/00

(54) **Process for the recovery of metals.**

(71) Applicant: Ces B.V., 6704 AT Wageningen (NL)
(72) Inventor: Ramtahalsing, Iwan Soebhaas, 2512 HS Den Haag (NL); Reuter, Markus Andreas, 2678 DA De Lier (NL); Schuiling, Roelof Dirk, 3721 TH Bilthoven (NL); Aurich, Volker Gerard, 6862 ZC Oosterbeek (NL); Hage, Hans, 3581 VT Utrecht (NL)
(74) Representative: Barendregt, Frank, Drs.

(57) **Abstract**

Process for the recovery of metals from metal-containing solutions and/or slurries, in which process a metal-containing solution and/or slurry is contacted at superatmospheric pressure and at a temperature above 200°C with an organic reducing agent, and in which the metal thus formed, is substantially recovered from the reaction mixture.

## Description

The invention relates to a process for the recovery of metals from metal-containing solutions and/or slurries.

In particular the invention relates to a process for the selective recovery of metals from such solutions and/or slurries, also containing one or more further metals.

The recovery of metals from ores has been put into practice as from the earliest ages of industrial activity.

Basically, most features of the ancient processing of metal ores are still to be found in the processes to date, albeit that many new techniques have been developed and the efficiency of each individual step has been dramatically improved.

One of the more common large-scale recovery methods comprises fragmenting lumps of base metal ores, milling the fragments into small pieces and concentrating the pieces by means of, for example, flotation. By separation of the particles, roasting and reductive smelting, the metal is then recovered.

According to another widely used method, the metals are leached from the ores with the aid of inorganic acids such as sulphuric acid. From the resulting leach-liquor, the metal ions are extracted with an organic phase. The extract is thoroughly mixed with an acid aqueous solution, whereby an electrolyte containing the desired metal ions is formed. By subsequent electrolysis the metal is recovered from the electrolyte.

Although technically feasible and commercially applied, these methods have the disadvantage of involving the use of expensive chemicals and/or techniques with inherent high energy costs. Accordingly, efforts are still being made to improve the economy and the efficiency of the known metal recovery processes.

In HUTNICKÉ, 1966,Vol 5, p 354-358, an article by Jaroslav Petlicka and Ladislav Klir has been published, relating to the selective recovery of copper from solutions containing copper and zinc salts by reduction with the aid of sawdust.

The process is carried out in an autoclave, operated at elevated temperature and pressure. Best results are obtained at a temperature of 180°C, it being endeavoured to use lower temperatures, e.g. of about 140°C. As reductors various types of sawdust have been investigated, typically in combination with KMnO₄, acting as a promotor for the oxidation of the reductor. The reductor is applied in excess and consequently the reduced copper is obtained in admixture with reductor. In order to recover the copper, remelting of the solid phase, followed by filtration, is required.

It has now been found that by operating the process at a temperature above 200°C, no initiator for oxidizing the reductor is needed and substantially complete oxidation of the reductor and reduction of the metal ions are achieved, thus facilitating the recovery of the reduced metal from the reaction mixture.

The invention may be defined as relating to a process for the recovery of metals from metal-containing solutions and/or slurries, in which process a metal-containing solution and/or slurry is contacted at superatmospheric pressure and at a temperature above 200°C with an organic reducing agent, and in which the metal thus formed, is substantially recovered from the reaction mixture.

A variety of metal-containing solutions or slurries can be used. For example, a suitable starting material consists of a concentrated leach-liquor, containing at least several grams of metal per litre. These leach-liquors are obtained e.g. by direct pressure-leaching of oxidic metal ores, sometimes after a roasting treatment of a sulphidic metal ore has been carried out.

Also, diluted metal-containing solutions may be used, for example solutions containing from 1-5 gram metal per litre or less, such as diluited leach-liquors or diluted solutions obtained by bioleaching or dewatering of mines.

The solutions and slurries may contain ions of a single metal or of two or more metals. In the slurries the metal(s) may be entirely dissolved, or may be present in the slurried particles of the system.

If more than one metal is present, the process according to the invention provides an attractive method for the selective recovery of one or more metals. Although not wishing to be bound by theory, it is considered likely that metals having a relatively low electronegativity will be substantially reduced, before metals having a higer electronegativity are reduced to any significant extent.

Consequently, various metals can be recovered successively from the starting solution or slurry containing two or more different dissolved metals.

The process of the invention is of particular interest for the recovery of copper, either directly from solutions or slurries comprising copper ions as substantially the only metal ions, or selectively from solutions or slurries containing at least one further metal. Accordingly, copper may be selectively recovered from a solution or slurry containing dissolved copper and at least one further dissolved or undissolved metal. Examples of other metals that may be present in dissolved (ionic) form are metals, selected from the group consisting of silver, tin, lead, iron, nickel and cobalt. Examples of other metals that may be present in non-dissolved form are iron and zinc. Typical examples of suitable starting materials are solutions and slurries containing copper and silver, copper and tin, copper and nickel, copper and iron, copper,nickel and iron, and copper and zinc.

In the process of the invention, the metal(s) to be recovered are reduced by contacting the metal solution or slurry with an organic reducing agent. During the resulting reaction the organic reducing agent is oxidized.

Depending on the applied reaction conditions, the nature and the amount of reducing agent, a partial or substantial complete oxidation will occur.

It will be clear that it would be desirable to achieve a complete or almost complete conversion of the reducing agent during the reaction, because the reduced metal will then be present as the only solid phase in the system.

Separation of the metal from the other components in the reaction mixture will be considerably more easy than in the event of a solid phase, comprising the reduced metal in admixture with non-converted or partly converted solid components consisting of, or derived from the organic reducing agent.

Preferred organic reducing agents are therefore organic compounds which are capable to form - under the prevailing reaction conditions - only liquid and/or gaseous oxidation products. Very suitable in this respect are carbohydrates which are readily oxidized into liquid, and to a large extent, gaseous products such as water, carbondioxide and the like. Also, carbohydrate containing substances may be used such as pulp, sawdust and related wood-based materials.

In particular preferred organic reducing agents are natural plant-based carbohydrates. Most preferred is cellulose which is easily available at relatively low cost and which proves to be a very effective agent in the reduction of metals under the conditions of the invention. Also, hemi-cellulose is an effective reducing agent and is, accordingly, preferred in the present process.

It is noted that under the conditions applied in the known process described in the abovementioned article by Petlicka and Klir, cellulose practically did not reduce copper at all.

The amount of organic reducing agent to be used is related to the effectiveness of the selected agent, to the amount of metal(s) to be reduced, as well as to the prevailing temperature and pressure conditions.

Preferably, the amount of organic reducing agent is selected such that the ratio between this amount and the amount of metal(s) to be recovered, is in the range of 1:1 to 1:8, in particular in the range of 1:2 to 1:6. Most preferably, the amount of organic reducing agent is chosen such that the said ratio is in the range of 1:4 to 1:5.

In the process according to the invention, superatmospheric pressures are applied, relating to the selected reaction temperature. Usually they are in the range of 15 to 110 bar. Preferred pressures are in the range of 20 to 100 bar and in particular in the range of 20 to 45 bar.

According to the invention, reaction temperatures above 200°C are applied. Although there is obviously an upper temperature limit for practical and economic operation of the process, above which no significant gains in metal recovery are achieved and above which the used reaction equipment has to withstand excessive requirements, it is considered that suitable reaction temperatures may well be selected between 200 and 375°C. Preferred temperatures are between 200 and 300°C and most preferred are temperatures selected in the range of 210-270°C.

The process according to the invention may conveniently be carried out in an autoclave. Especially for small-scale experiments and batch operations of the process an autoclave represents a practical and acceptable type of equipment. However, since in practice commercial-scale embodiments of the process and continuous operation thereof are of considerably greater interest, the possibilities of an autoclave are limited.

It has been found that for such embodiments and modes of operation the use of a reactor of the plug-flow type is considerably more advantageous.

Plug-flow operation is performed in a tubular reactor, the length of which can easily be adapted to the conditions and requirements of the process. Especially the duration of the reaction can easily be modified with this type of reactor.

Conveniently, the reactants are supplied to the reactor simultaneously. Thus, an aqueous slurried mixture of metal solution and organic reducing agent may be introduced to the, usually preheated, reactor under a pressure related to the selected reaction temperature.

Air may be present as well, but in general the presence of oxygen is unnecessary for initiating the reaction and indeed the presence of oxygen is preferably avoided.

The duration of the reaction may vary greatly, depending on the selected temperature, the composition of the reaction mixture, etc. Conveniently, the reaction, which is exothermic, is continued for a period in the range of 10 minutes to 4 hours, preferably for a period between 15 minutes and 1 hour.

During the exothermic reaction the metal ions are reduced under formation of solid particles, e.g. having an average diameter of at least 20 micron. The particles are usually in the form of granules and may reach an average diameter of for example 80 to 100 micron. Owing to the formation of these relatively large particles, the separation of the metal(s) from the other components of the reaction mixture is considerably simplified. For this separation conventional techniques may be applied, such as separation by using settling units or cyclones.

The invention will further be illustrated by the following, non-limiting examples.

### Example 1

A series of batch-experiments were carried out whereby a 600 ml autoclave was charged with a slurry composed of various amounts of an aqueous solution of coppersulphate (CuSO₄.5H₂O) and of cellulose particles. The autoclave was closed and the temperature was raised to 250°C. The pressure was 25 bar. After a reaction time of 60 minutes, the pressure was released and the reaction mixture was transferred to a separation vessel in which the liquid was separated from the solid materials. By analysis of the liquid, the degree of copper reduction was established.

It was found that with a concentration of 20 gram copper per litre and 5 gram cellulose per litre, 63.9% of the initial copperions had been reduced to granules of metallic copper.

With a concentration of 40 gram copper per litre and 10 gram cellulose per litre, the copper reduction was 99.9%.

### Example 2

In the same way as described in Example 1, batch-experiments were carried out, whereby however reaction temperatures of 225°C and 250°C were selected.

The retention time was 60 minutes, the concentration of copper was 15 gram per liter and the amount of cellulose 2x the stoichiometric amount.

At 225°C, the end concentration of copper was 0.22 gram per litre and at 250°C 0.06 gram per litre, i.e. a removal of 98 and 99.5 %, respectively.

### Example 3

In the same way as described in Example 1, a batch-experiment was carried out, whereby however the autoclave was charged with a slurry comprising a solution of coppersulphate (20 gram copper per litre), a solution of ironsulphate (20 gram iron per litre) and cellulose (10 gram per litre).

It was found that copper was substantially completely reduced, whereas the liquid part of the reaction mixture still contained substantially the initial amount of iron.

### Example 4

Similarly as described in Example 1, an experiment was carried out, whereby the autoclave was charged with a solution containing Cu²⁺, Ni²⁺, Fe³⁺, As (in the form of H₃AsO₄) and cellulose in concentrations of 10 g/l, 10 g/l, 5 g/l, 33 ppm and 10 g/l, respectively. After termination of the experiment, the resulting solid phase was washed thoroughly with water to rinse off any carbonaceous material.

The purity of copper was found to be 99.97%.

## Claims

1. Process for the recovery of metals from metal-containing solutions and/or slurries, in which process a metal-containing solution and/or slurry is contacted at superatmospheric pressure and at a temperature above 200°C with an organic reducing agent, and in which the metal thus formed, is substantially recovered from the reaction mixture.

2. Process as claimed in claim 1, characterized in that copper is recovered from a copper-containing solution.

3. Process as claimed in claim 1, characterized in that a metal is selectively recovered from a solution and/or a slurry containing that metal and at least one further metal.

4. Process as claimed in claim 3, characterized in that copper is selectively recovered from a solution containing copper and at least one further metal, selected from the group consisting of silver, tin, nickel, iron, lead and cobalt.

5. Process as claimend in any of claims 1-4, characterized in that the process is carried out at a pressure in the range of 20 to 100 bar.

6. Process as claimed in claim 5, characterized in that the pressure is in the range of 20 to 45 bar.

7. Process as claimed in any of claims 1-6, characterized in that the process is carried out at a temperature between 200 and 300°C.

8. Process as claimed in claim 7, characterized in that the temperature is in the range of 210-270°C.

9. Process as claimed in any of claims 1-8, characterized in that as organic reducing agent a carbohydrate is applied.

10. Process as claimed in claim 9, characterized in that as organic reducing agent a natural plant-based carbohydrate is applied.

11. Process as claimed in claim 9 or 10, characterized in that as reducing agent cellulose and/or hemicellulose is applied.

12. Process as claimed in any of claims 1-11, characterized in that the ratio between the amount of organic reducing agent and the amount of metal(s) to be recovered is in the range of 1:1 to 1:8.

13. Process as claimed in claim 12, characterized in that the said ratio is in the range of 1:2 to 1:6, in particular in the range of 1:4 to 1:5.

14. Process as claimed in any of claims 1-13, characterized in that the process is carried out in a plug-flow reactor.

15. Metals whenever obtained by a process as claimed in any of claims 1-14.
